# EUROPÄISCHE PATENTANMELDUNG

(11) **EP 1 641 310 A1**
(43) Veröffentlichungstag der Anmeldung: **29.03.2006**
(21) Anmeldenummer: 04023025.2
(22) Anmeldetag: 28.09.2004
(51) Int. Cl.: H04Q 11/04

(54) **Verfahren zum Trennen aller bestehenden Verbindungen einer Vermittlungsstelle über die V5.2-Schnittstelle**

(71) Anmelder: SIEMENS AKTIENGESELLSCHAFT, 80333 München (DE)
(72) Erfinder: Deak, Jan, 84102 Bratislava (SK)
(74) Vertreter: Berg, Peter

(57) **Zusammenfassung**

Die Erfindung betrifft ein Verfahren zum Trennen aller bestehenden Verbindungen (Vx) einer Vermittlungsstelle (LE), die über eine V5.2-Schnittstelle (IF) mit einem Zugangsnetz (AN) verbunden ist, welches aus einem Verteilbereich (VB) und einem Anschlussbereich (AB) mit mehreren Finite-State-Automaten besteht (FSx). Beim erfindungsgemäßen Verfahren wird eine Sammelnachricht (SNx) zum Trennen aller bestehenden Verbindungen (Vx) von der Vermittlungsstelle (LE) an das Zugangsnetz (AN) gesendet. Diese Sammelnachricht (SNx) wird vom Verteilbereich (VB) des Zugangsnetzes (AN) an alle Finite-State-Automaten (FSx) des Anschlussbereiches (AB), die an Verbindungen (Vx) dieser Vermittlungsstelle (LE) beteiligt sind, weitergeleitet. Ausgelöst durch diese Sammelnachricht (SNx) werden die bestehenden Verbindungen (Vx) von den Finite-State-Automaten (FSx) getrennt und vom Zugangsnetz (AN) wird eine Bestätigungsnachricht (BNx) an die Vermittlungsstelle (LE) zurückgesendet.

Das erfindungsgemäße Verfahren hat den Vorteil, dass die Nachrichten für den Fall, dass alle bestehenden Verbindungen (Vx) einer Vermittlungsstelle (LE) getrennt werden müssen, durch das Versenden einer Sammelnachricht (SNx) signifikant reduziert werden, und es dadurch zu keiner Überlastung der V5.2-Schnittstelle (IF) kommt und so die von der Standardisierung definierte Zeit für den Verbindungsabbau eingehalten werden kann.

## Beschreibung

Die Erfindung betrifft ein Verfahren zum Trennen aller bestehenden Verbindungen einer Vermittlungsstelle, die über eine V5.2-Schnittstelle mit einem Zugangsnetz verbunden ist, welches aus einem Verteilbereich und einem Anschlussbereich mit mehreren den einzelnen Verbindungen zu den Teilnehmern entsprechenden Finite-State-Automaten besteht.

Als Vermittlungsstelle wird definitionsgemäß ein Knoten in einem Netz bezeichnet, in dem Daten in verschiedene Richtungen nach Maßgabe von Steuerinformationen verteilt werden. Diese Steuerinformationen werden in Abhängigkeit vom eingesetzten Vermittlungsprinzip auf unterschiedliche Weise zur Verfügung gestellt.

Beim paketorientierten Vermittlungsprinzip, bei dem zur Übermittlung von Daten kein permanenter, durchgehender, physikalischer Kanal vorgesehen ist, wird die Steuerinformation in die zu übertragenden Daten mitverpackt. Bei der Leitungsvermittlungstechnik, wie sie beispielsweise in Telekommunikationsnetzen oder bei ISDN verwendet wird, wird die Steuerinformation auf einem separaten Kanal, dem sogenannten Signalisierungskanal, geliefert.

Bei der Leitungsvermittlungstechnik wird anders als beim paketorientierten Vermittlungsprinzip für die gesamte Dauer einer Verbindung ein durchgehender Kanal geschaltet. Dabei ist eine Verbindung als eine nutzbare, durchgeschaltete, physikalische Leitung zwischen fest definierten Zugangspunkten des Netzes definiert. Sie kann aus mehreren, einzelnen Übertragungsstrecken zwischen Netzknoten, wie beispielsweise Vermittlungsstellen, bestehen.

Unter einem Kanal wird eine eingerichtete Punkt-zu-Punkt-Verbindung zur Übertragung von Signalen verstanden, wobei in der Leitungsvermittlungstechnik zwischen Verkehrskanälen zur Übertragung von Nutzdaten und sogenannten Signalisierungskanälen zur Übertragung der Steuerinformationen unterschieden wird.

Der Prozess der Leitungsvermittlung ist in drei Phasen unterteilt, diese sind Verbindungsaufbau, Datenübertragung und Verbindungsabbau. Die Vermittlungsfunktion wird in der Phase des Verbindungsaufbaus von den Vermittlungsstellen wahrgenommen. Die Verbindung bleibt zwischen der Phase des Verbindungsaufbaus und der Phase des Verbindungsabbaus selbst dann bestehen, wenn keine Datenübertragung erfolgt.

In einem leitungsvermittlungsorientierten Telekommunikationsnetz gibt es neben den Vermittlungsstellen auch das sogenannte Zugangsnetz. Unter einem Zugangsnetz wird definitionsgemäß jener Teil des Telekommunikationsnetzes verstanden, an den die Teilnehmer angeschlossen sind und über den sie Zugang zu den Diensten des Telekommunikationsnetzes haben. Über das Zugangsnetz sind die Teilnehmer mit der nächstliegenden Vermittlungsstelle verbunden.

Das Zugangsnetz wird dabei in zwei Bereiche unterteilt, den Verteilbereich und den Anschlussbereich. Im Verteilbereich werden die Anschlüsse mehrerer Teilnehmer gebündelt und dann der Vermittlungsstelle zugeführt. Als Anschlussbereich wird jener Bereich des Zugangsnetzes bezeichnet, in dem durch bestimmte Netzressourcen wie zum Beispiel eine Leitung exklusiv der Zugang für nur einen Teilnehmer ermöglicht wird. Dabei wird jeder Netzressource des Anschlussbereiches des Zugangsnetzes ein Finite-State-Automat im Zugangsnetz zugeordnet, von dem der aktuelle Zustand dieser Netzressource definiert wird. Solche Zustände können beispielsweise "betriebsbereit", "in Betrieb befindlich", "blockiert" oder "außer Funktion" sein, wobei der Zustand "betriebsbereit" als Null-Zustand bezeichnet wird. Im Detail wurden diese Zustände vom European Telecommunication Standard Institute oder kurz ETSI definiert.

Der Übergang vom Zugangsnetz zur Vermittlungsstelle erfolgt über eine definierte Schnittstelle, die sogenannte V5.2-Schnittstelle. Die V5.2-Schnittstelle ist eine offene, hersteller- und systemunabhängige Schnittstelle, die im Standard ETS 300 347-1 des ETSI bzw. von der ITU als G.965 festgelegt wurde.

Diese Schnittstelle hat eine Konzentratorfunktion integriert, die eine höhere Kapazität über die gleiche Anzahl von Anschlüssen abwickelt als die Vorgängerversion V 5.1. Diese Konzentratorfunktion wird durch den Einsatz des sogenannten Bearer-Channel-Connection-Protokolls bzw. BCC-Protokolls erreicht. Das BCC-Protokoll wird verwendet, um die Verkehrskanäle zu den Teilnehmeranschlüssen dynamisch zuzuweisen und kommt hauptsächlich bei ISDN zum Einsatz.

Zusätzlich wird von der V5.2-Schnittstelle auch das PSTN-Protokoll verwendet, wobei PSTN für Public Switched Telephone Network steht. Dieses Protokoll ist ein Signalisierungsprotokoll. Es wird zum Transfer von Steuerinformationen zwischen der Vermittlungsstelle und dem Zugangsnetz für PSTN-Leitungen verwenden.

Bei Vermittlungsstellen können nun im laufenden Betrieb Situationen auftreten, bei denen es notwendig ist, alle bestehenden Verbindungen der Vermittlungsstelle zum Zugangsnetz und damit zu den Teilnehmern zu trennen. Eine solche Situation ist beispielsweise das Ablaufen eines internen System-Wartungsprozesses in der Vermittlungsstelle, bei dem die Vermittlungsstelle zwar nicht außer Betrieb gesetzt werden muss, aber alle Verbindungen getrennt sein müssen.

Aus dem Stand der Technik bekannte bzw. naheliegende Lösungsansätze gehen davon aus, dass in diesem Fall für PSTN-Leitungen eine Kommunikation über das PSTN-Protokoll und das BCC-Protokoll und für ISDN-Leitungen über das BCC-Protokoll und über die aktiven Datalinks erfolgt. Dabei wird bei PSTN-Leitungen für jede bestehende Verbindung eine Nachricht im PSTN-Protokoll zum Trennen der Verbindung und eine Nachricht im BCC-Protokoll zum Freigeben der Nutzkanäle von der Vermittlungsstelle an das Zugangsnetz über die V5.2-Schnittstelle gesendet. Für ISDN-Leitungen wird für jede bestehende Verbindung eine Nachricht im BCC-Protokoll von der Vermittlungsstelle über die V5.2-Schnittstelle an das Zugangsnetz übermittelt, um die Nutzkanäle freigeben. Für jede dieser Nachrichten wird außerdem vom Zugangsnetz nach dem Trennen der Verbindung eine Quittierung an die Vermittlungsstelle zurückgesendet. Dadurch wird eine Vielzahl von Nachrichten erzeugt, die über die V5.2-Schnittstelle geleitet werden. Diese Anzahl von Nachrichten führt zu einer Verlängerung des Ausfalls der Vermittlungsstelle und es können in dieser Zeit keine Verbindungen für Teilnehmer hergestellt werden. Es kann auch zur Überlastung der V5.2-Schnittstelle kommen, wodurch die von der Standardisierung definierte Zeit für den Verbindungsabbau von PSTN- bzw. ISDN-Verbindungen überschritten wird.

Der Erfindung liegt daher die Aufgabe zugrunde, ein Verfahren anzugeben, welches eine Überlastung der V5.2-Schnittstelle durch Nachrichten zum Trennen von Verbindungen und zum Freigeben der Nutzkanäle verhindert, damit die definierte Zeit für den Verbindungsabbau eingehalten wird und die Ausfallzeit der Vermittlungsstelle gering bleibt.

Erfindungsgemäß geschieht dies mit einem Verfahren der eingangs erwähnten Art, bei dem eine Sammelnachricht zum Trennen aller bestehenden Verbindungen von der Vermittlungsstelle an das Zugangsnetz gesendet wird, diese Sammelnachricht vom Verteilbereich des Zugangsnetzes an alle Finite-State-Automaten des Anschlussbereiches, die an Verbindungen dieser Vermittlungsstelle beteiligt sind, weitergeleitet wird, damit ausgelöst durch diese Sammelnachricht die bestehenden Verbindungen von den Finite-State-Automaten getrennt werden und vom Zugangsnetz eine Bestätigungsnachricht an die Vermittlungsstelle zurückgesendet wird.

Das erfindungsgemäße Verfahren hat den Vorteil, dass die Nachrichten für den Fall, dass alle bestehenden Verbindungen einer Vermittlungsstelle getrennt werden müssen, durch das Versenden einer Sammelnachricht signifikant reduziert wird, es dadurch zu keiner Überlastung der V5.2-Schnittstelle kommt und so die von der Standardisierung definierte Zeit für den Verbindungsabbau eingehalten werden kann.

Es ist auch vorteilhaft, wenn die Einzelnachrichten, die zum Trennen der bestehenden Verbindungen von der Vermittlungsstelle für jede Verbindung oder als Quittierung nach erfolgter Verbindungstrennung versendet werden, unterdrückt werden und durch die Sammelnachricht ersetzt werden. Das führt zu einer signifikanten Reduktion der Anzahl an Nachrichten, die über die V5.2-Schnittstelle versendet werden, da nur eine Nachricht zum Trennen der bestehenden Verbindungen von der Vermittlungsstelle an das Zugangsnetz gesendet wird.

Günstig ist es auch, wenn für das von der V5.2-Schnittstelle verwendete PSTN-Protokoll so eine Sammelnachricht vorgesehen ist, da mit Hilfe dieser Sammelnachricht alle von den bestehenden Verbindungen verwendeten Signalisierungskanäle in den Zustand "betriebsbereit" zurückgesetzt werden können, um so die bestehenden Verbindungen zu trennen.

Weiters ist es auch vorteilhaft, wenn auch für das von der V5.2-Schnittstelle verwendete ein Sammelnachricht zum Trennen aller bestehenden Verbindungen vorgesehen ist, um mit dieser Sammelnachricht alle von den Verbindungen benutzten Nutzkanäle in den Betriebszustand "betriebsbereit" zu versetzen und so die bestehenden Verbindungen der Vermittlungsstelle zu trennen.

Die Erfindung wird anhand einer Figur näher erläutert. Diese zeigt beispielhaft den schematischen Aufbau einer Vermittlungsstelle und eines Zugangsnetzes, in denen das erfindungsgemäße Verfahren zu Einsatz kommt

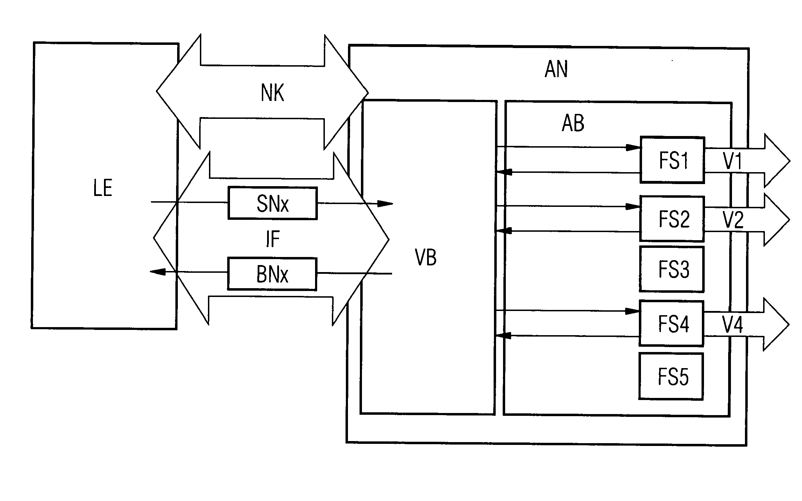

Die in der Figur dargestellte Vermittlungsstelle LE ist über eine V5.2-Schnittstelle IF mit einem Zugangsnetz AN verbunden. Das Zugangsnetz AN besteht aus einem Verteilbereich VB und einem Anschlussbereich AB, in dem für jede mögliche Teilnehmer-verbindung Vx ein Finite-State-Automat FSx vorgesehen ist.

Soll nun in der Vermittlungsstelle LE ein Systemwartungsprozess ablaufen, so ist es notwendig, alle aktiven Verbindungen V1, V2, V4 zu trennen. Dazu wird in einem ersten Schritt im PSTN-Protokoll eine Sammelnachricht SN1 mit der Botschaft "DISCONNECT ALL" erzeugt, um die Signalisierungskanäle der Verbindungen V1, V2, V4 freizugeben. Diese Sammelnachricht SN1 wird in einem zweiten Schritt über die V5.2-Schnittstelle IF an den Verteilbereich VB des Zugangsnetzes AN weitergeleitet. Erhält der Verteilbereich VB des Zugangsnetzes AN nun diese Sammelnachricht SN1 des PSTN-Protokolls, so wird diese vom Verteilbereich in einen Befehl zum Trennen aller bestehenden Verbindungen bzw. zum Freigeben aller benutzten Signalisierungskanäle umgewandelt und in einem weiteren Schritt an die Finite-State-Automaten FS1, FS2, FS4 gesendet. Im nächsten Schritt wird der Zustand der Finite-State-Automaten FS1, FS2, FS4 auf "betriebsbereit", den sogenannten Null-Zustand, gesetzt, wodurch die Signalisierungskanäle freigegeben werden. Wenn alle Finite-State-Automaten FS1, FS2, FS4 in den Null-Zustand versetzt worden sind, wird in einem weiteren Schritt des Verfahrens eine Bestätigungsnachricht BN1 "DISCONNECT ALL COMPLETE" von Verteilbereich VB des Zugangsnetzes AN erzeugt und danach an die Vermittlungsstelle LE gesendet.

Für die Freigabe der Nutzkanäle NK der bestehenden Verbindungen V1, V2, V4 wird zuerst in der Vermittlungsstelle LE im BCC-Protokoll eine Sammelnachricht SN2 "DE-ALLOCATION-ALL" erzeugt und diese Nachricht SN2 an den Verteilbereich VB des Zugangsnetzes AN weitergeleitet. In einem nächsten Schritt wird diese Nachricht SN2 an alle Finite-State-Automaten FS1, FS2, FS4 der bestehenden Verbindungen V1, V2, V4 verteilt. Nachdem die Nutzungskanäle der Verbindungen V1, V2, V4 freigegeben wurden und damit die Verbindungen V1, V2, V4 beendet, wird vom Verteilbereich VB des Zugangsnetzes AN eine Bestätigungsnachricht BN2 "DE-ALLOCATION-ALL-COMPLETE" erzeugt und an die Vermittlungsstelle LE gesendet.

Für den Fall, dass statt eine PSTN-Verbindung eine ISDN-Verbindung getrennt werden soll, kommen nur die Schritte für das BCC-Protokoll zur Anwendung, da bei ISDN die Datenverbindungen, die sogenannten Datalinks, direkt zwischen der Vermittlungsstelle LE und dem Teilnehmer aufgebaut werden. Daher ist es notwendig, bei ISDN-Verbindungen jede bestehende Verbindung Vx im Signalisierungsbereich durch ihren eigenen Datalink zu trennen. In diesem Sonderfall wird dann die Information zum Trennen der Verbindung Vx auf Signalisierungsebene in der V5.2-Schnittstelle IF auf mehrere Datalinks aufgeteilt, um eine Überlastung der V5.2-Schnittstelle IF zu vermeiden. Da bei ISDN die Datalinks im Gegensatz zu PSTN-Protokoll und BCC-Protokoll auf mehrere Kommunikationskanäle an der V5.2-Schnittstelle IF verteilt werden, ist die Lastsituation beim Trennen aller Verbindungen geringer als beim PSTN-Protokoll und BCC-Protokoll.

## Patentansprüche

1. Verfahren zum Trennen aller bestehenden Verbindungen (Vx) einer Vermittlungsstelle (LE), die über eine V5.2-Schnittstelle (IF) mit einem Zugangsnetz (AN) verbunden ist, welches aus einem Verteilbereich (VB) und einem Anschlussbereich (AB) mit mehreren Finite-State-Automaten (FSx) besteht, **dadurch gekennzeichnet, dass** eine Sammelnachricht (SNx) zum Trennen aller bestehenden Verbindungen (Vx) von der Vermittlungsstelle (LE) an das Zugangsnetz (AN) gesendet wird, dass diese Sammelnachricht (SNx) vom Verteilbereich (VB) des Zugangsnetzes (AN) an alle Finite-State-Automaten (FSx) des Anschlussbereiches (AB), die an Verbindungen (Vx) dieser Vermittlungsstelle (LE) beteiligt sind, weitergeleitet wird, dass ausgelöst durch diese Sammelnachricht (SNx) die bestehenden Verbindungen (Vx) von den Finite-State-Automaten (FSx) getrennt werden und vom Zugangsnetz (AN) eine Bestätigungsnachricht (BNx) an die Vermittlungsstelle (LE) zurückgesendet wird.

2. Verfahren nach Anspruch 1, **dadurch**
**gekennzeichnet, dass** Einzelnachrichten, die zum Trennen der bestehenden Verbindungen (Vx) von der Vermittlungsstelle (LE) für jede bestehende Verbindung (Vx) an die zugehörigen Finite-State-Automaten (FSx) im Zugangsnetz (AN) oder als Bestätigungsnachricht (BNx) nach erfolgter Trennung der jeweiligen Verbindung (Vx) an die Vermittlungsstelle (LE) gesendet werden, unterdrückt und durch die Sammelnachricht (SNx) zum Trennen aller bestehenden Verbindungen (Vx) oder durch eine Sammelbestätigungsnachricht (BNx) an die Vermittungsstelle (LE) ersetzt werden.

3. Verfahren nach einem der Ansprüche 1 bis 2 **dadurch**
**gekennzeichnet, dass** im PSTN-Protokoll als Bestandteil der V5.2-Schnittstelle (IF) die Sammelnachricht (SN1) zum Trennen der bestehenden Verbindungen (Vx) vorgesehen wird.

4. Verfahren nach einem der Ansprüche 1 bis 3 **dadurch**
**gekennzeichnet, dass** im BCC-Protokoll als Bestandteil der V5.2-Schnittstelle (IF) die Sammelnachricht (SN2) zum Trennen der bestehenden Verbindungen (Vx) vorgesehen wird.
